# EUROPEAN PATENT APPLICATION

(11) **EP 4 684 841 A1**
(43) Date of publication of application: **28.01.2026**
(21) Application number: 24191227.8
(22) Date of filing: 26.07.2024
(51) Int. Cl.: A62B 9/00, A62B 9/04, F16L 19/00

(54) **SECURE THREADED CONNECTION**

(71) Applicant: Dräger Safety AG & Co. KGaA, 23560 Lübeck (DE)
(72) Inventor: FARNABY, James, Newcastle upon Tyne, NE3 5QL (GB); LAGEAT, Emilie, Morpeth, NE61 5BB (GB); WRIGLEY, Gordon, Newcastle Upon Tyne, NE3 5LU (GB); TOWNSEND, Paul Nicholas, Cramlington, NE23 1NR (GB)
(74) Representative: Haseltine Lake Kempner LLP

(57) **Abstract**

There is disclosed a threaded connector configured to connect a pneumatic system of a breathing apparatus to a threaded connection of a breathing gas cylinder, the threaded connector comprising: a rotatable threaded element configured to connect to a corresponding thread of a breathing gas cylinder, the rotatable threaded element being rotatable in a first direction corresponding to tightening rotation of the threaded element to the corresponding thread and in a second direction corresponding to untightening rotation of the threaded element to the corresponding thread; a locking apparatus configured to control rotation of the threaded element, the locking apparatus having a first configuration preventing rotation of the threaded element in the second direction, and a second configuration permitting rotation of the threaded element in both the first and second directions; and a release mechanism configured to adapt the locking apparatus from the first configuration to the second configuration. Also disclosed is a breathing apparatus comprising a threaded connector.

## Description

### Background

Self-contained breathing apparatus (SCBA) systems are typically used by fire fighters to provide safe breathing gas in environments with contaminated atmospheres. Typical SCBA systems have a high-pressure system which includes a breathing gas tank (also referred to as a tank) at a nominal pressure of around 300 bar. The high-pressure system may be connected to a medium-pressure system via first stage pressure reduction device (e.g., a first stage pressure reducer). Such devices output breathing gas from the high-pressure system into the medium pressure system at a lower pressure, such as around 7 bar. This medium pressure breathing gas may then pass through a second stage pressure reduction device (e.g., a lung demand regulator) to further reduce the pressure to a level suitable for a user, such as a firefighter, to breathe. SCBA systems may generally also include a face mask for supplying breathable gas to a user, and a back plate for securing the breathing gas tank to the user's back.

In order for firefighters to be able to respond quickly to emergences, at least some of the pneumatic components (e.g., breathing gas tank and first stage pressure reducer) of SCBA systems will generally be stored and transported while connected together. Doing so may reduce any delay in a firefighter responding to an emergency caused by needing to assemble their SCBA system before use.

However, over time, storing and transporting pneumatic components while connected together can lead to loosening of the connections therebetween. This is especially true for connections that are designed to be tightened and untightened regularly by a user. Improvements in connection means used in such situations are therefore desirable.

### Summary

The invention described herein may generally relate to a connector for connecting a breathing gas cylinder to a pneumatic system of a breathing apparatus. The connector may be configured to permit tightening of the connector to the breathing gas cylinder, while preventing loosening of the connector. The connector may be further configured to be releasable to permit tightening and loosening of the connector.

In an aspect, there is provided a threaded connector configured to connect a pneumatic system of a breathing apparatus to a threaded connection of a breathing gas cylinder. The threaded connector comprising: a rotatable threaded element configured to connect to a corresponding thread of a breathing gas cylinder, the rotatable threaded element being rotatable in a first direction corresponding to tightening rotation of the threaded element to the corresponding thread and in a second direction corresponding to untightening rotation of the threaded element to the corresponding thread; a locking apparatus configured to control rotation of the threaded element, the locking apparatus having a first configuration preventing rotation of the threaded element in the second direction, and a second configuration permitting rotation of the threaded element in both the first and second directions; and a release mechanism configured to adapt the locking apparatus from the first configuration to the second configuration.

The threaded connector may be a threaded breathing apparatus connector.

The first configuration may be so as to prevent inadvertent disconnection of the threaded connector from the breathing gas cylinder.

The second configuration may be so as to selectively permit disconnection of the threaded connector from the breathing gas cylinder.

The release mechanism may be responsive to an input. The input may be a manual input, such as movement of a component or application of force by a user, or could be an electronic input, such as a control signal resulting from an interaction with a computer interface.

The locking apparatus may comprise a ratchet mechanism. The ratchet mechanism may, in the first configuration, permit rotation of the threaded element in the first direction while preventing rotation of the threaded element in the second direction. The ratchet mechanism may be released in the second configuration so as to permit rotation in both the first and second directions. The ratchet mechanism may comprise teeth or pawls, or may be friction ratchet. The ratchet mechanism may comprise a one-way clutch mechanism. The ratchet mechanism may comprise, for example, at least 28 tooth-shaped profiles. The ratchet mechanism may comprise, for example, a tooth pitch of up to 3 mm.

The locking apparatus may comprise a first engaging surface. The threaded element may comprise a corresponding second engaging surface. The first engaging surface may be configured to engage with the corresponding second engaging surface of the threaded element in the first configuration. The first engaging surface may be configured to disengage from the corresponding second engaging surface of the threaded element in the second configuration.

The first engaging surface and/or the second engaging surface may comprise teeth such that the first engaging surface and the second engaging surface are configured to form a ratchet. The first engaging surface may be configured to engage with a plurality of teeth of the second engaging surface when the locking apparatus is adapted from the first configuration to the second configuration. The first engaging surface may be configured to engage with a majority of the teeth of the second engaged surface when the locking apparatus is adapted from the first configuration to the second configuration. The first engaging surface may be configured to engage with all of the teeth of the second engaged surface substantially simultaneously when the locking apparatus is adapted from the first configuration to the second configuration.

The first engaging surface may be an annular first engaging surface. The annular first engaging surface may be arranged coaxially with the threaded element. The annular first engaging surface may also be arranged concentrically with the threaded element. The second engaging surface may be an annular second engaging surface. The annular second engaging surface may be arranged coaxially with the annular first engaging surface. Annular engaging surface may be understood to mean an engaging surface taking an annular or ring shape. The first and second engaging surfaces may comprise a common axis. The first and second engaging surfaces may be axially facing surfaces, and optionally opposingly facing axial surfaces.

On activation of the release mechanism, the first engaging surface may be disengaged from the second engaging surface. On activation of the release mechanism, the first engaging surface may be disengaged from the second engaging surface so as to adapt the locking apparatus from the first configuration to the second configuration.

The release mechanism may be activated by moving the locking apparatus and the threaded element apart to thereby move the first engaging surface of the locking apparatus apart from the second engaging surface of the threaded element. The release mechanism may be activated by moving the locking apparatus apart from the threaded element to thereby move the first engaging surface of the locking apparatus apart from the second engaging surface of the threaded element. The release mechanism may be activated by axially moving the first or second engaging surface, such that the first and second engaging surfaces become disengaged, optionally while maintaining a coaxial positioning of the first and second engaging surfaces.

The threaded connector may further comprise an annular handwheel arranged around the threaded element. Rotation of the handwheel may cause rotation of the threaded element. The release mechanism may be activated by pushing the handwheel towards the locking apparatus to move the second engaging surface of the locking apparatus apart from the first engaging surface of the threaded element. The annular handwheel may be slidably engaged with the threaded element.

Slidably engaged will be understood to mean that the handwheel can slide longitudinally relative to the threaded element but cannot necessarily rotate relative to the threaded element.

The first engaging surface may comprise a first plurality of tooth-shaped profiles. The second engaging surface may comprise a corresponding second plurality of tooth-shaped profiles. The first plurality of tooth-shaped profiles may be configured to interlock with the corresponding second plurality of tooth-shaped profiles in the first configuration to thereby prevent rotation of the threaded element relative to the locking apparatus. The first and/or second plurality of tooth-shaped profiles may be referred to as 'teeth' or 'pawls'.

The first engaging surface may be configured to frictionally engage the second engaging surface to thereby prevent rotation of the threaded element relative to the locking apparatus in the first configuration.

The first engaging surface and the second engaging surface may form a clutch arrangement. A coefficient of friction between the first and second engaging surfaces may be at least 0.5, and may be at least 0.8 or 0.9.

The second engaging surface may be arranged around the threaded element. The second engaging surface may extend radially or longitudinally relative to the threaded element.

The second engaging surface may comprise an annular shape. The second engaging surface may comprise a cylindrical shape or an open cylindrical shape.

In the first configuration the locking apparatus may permit rotation of the threaded element in the first direction while preventing rotation of the threaded element in the second direction to permit tightening rotation and prevent untightening rotation of the threaded element, so as to prevent disconnection of the threaded connector with the breathing gas cylinder.

In the first configuration, the locking apparatus may prevent rotation of the threaded element in both the first direction and the second direction to prevent tightening and untightening rotation of the threaded element so as to prevent disconnection or overtightening of the threaded element of the threaded connector with the breathing gas cylinder.

The locking apparatus may comprise a holding mechanism configured to maintain the locking apparatus in the second configuration without the release mechanism being activated. The holding mechanism may comprise a radially extending plunger configured to engage a recess in the threaded element when the locking apparatus is in the second configuration to thereby hold the locking apparatus in the second configuration.

The locking apparatus may be biased into the first configuration. The locking apparatus may be biased into the first configuration such that the locking apparatus remains in the first configuration unless the release mechanism is activated.

The locking apparatus may be biased by a biasing element configured to urge the first engaging surface of the locking apparatus towards the second engaging surface of the threaded element. The biasing element may be a spring such as a coiled spring.

The threaded connector may further comprise a central conduit configured to permit a flow of breathing gas from a breathing gas cylinder to a pneumatic system. The locking apparatus and the threaded element may be arranged around a longitudinal axis of the central conduit. The threaded element may be rotatable around the central conduit.

The central conduit may comprise a keying surface configured to engage a complementary keying surface of the locking apparatus to prevent rotation of the locking apparatus around the central conduit.

The release mechanism may be arranged coaxially with the threaded element. The release mechanism, or a part thereof, may be longitudinally movable along an axis of rotation of the threaded element. Longitudinally moving the release mechanism or part thereof along the axis of rotation of the threaded element may adapt the locking apparatus from the first configuration to the second configuration.

The release mechanism may be comprised in the handwheel such that axial movement of the handwheel along the axis of rotation of the threaded element (and handwheel) adapts the locking apparatus from the first configuration to the second configuration.

According to another aspect, there is provided a breathing apparatus comprising: a breathing gas cylinder; a pneumatic system, optionally comprising a first stage pressure reducer; and a threaded connector, wherein the threaded element of the threaded connector is connected to the breathing gas cylinder and the central conduit of the threaded connector is connected to the pneumatic system, thereby connecting the breathing gas cylinder and the pneumatic system.

### Brief Description of the Drawings

Arrangements of the invention will now be described, by way of example, and with reference to the accompanying drawings, in which:
Figure 1 shows a breathing apparatus according to an example arrangement comprising a tank and a pneumatic system;
Figures 2A-2C show various views of an embodiment of the present invention;
Figure 3 shows a cross sectional view of another embodiment of the present invention;
Figure 4 shows a cross sectional view of a further embodiment of the present invention; and
Figures 5A and 5B show various views of an additional embodiment of the present invention.

### Detailed Description of the Drawings

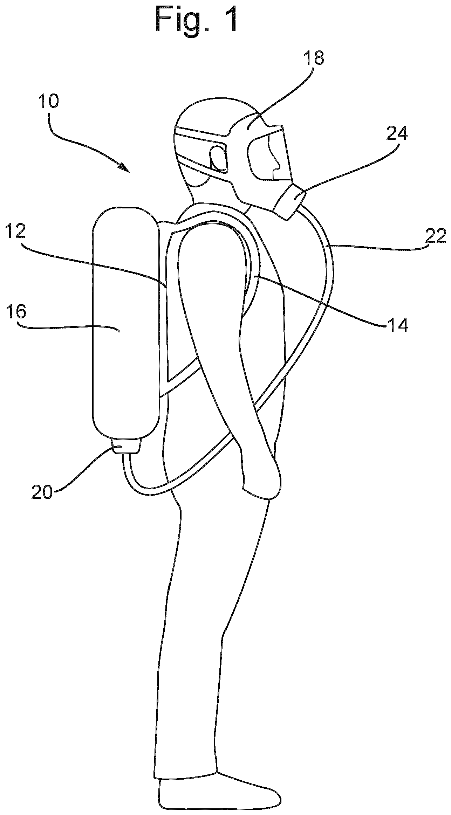

With reference to Figure 1, an example breathing apparatus 10 is shown. The breathing apparatus 10 is a self-contained breathing apparatus (SCBA) and comprises a support frame or back plate 12, straps 14 for securing the SCBA to a user, a breathing gas tank 16 (also referred to as tank 16), a face mask 18, a lung demand regulator 24 connectable to the face mask 18, and a pneumatic system 20 for delivering breathing gas from the tank 16 via a hose or flexible conduit 22 to the lung demand regulator 24, to thereby deliver breathing gas to the user wearing the face mask 18 on demand. The breathing apparatus 10 may further comprise other components or systems which are not shown, including but not limited to an electrical system, a monitoring system, or a communications system.

In this illustrated arrangement, the breathing apparatus 10 is a self-contained breathing apparatus (SCBA), but it should be understood that the lung demand regulator may also have applications in other types of breathing apparatus, such as self-contained underwater breathing apparatus (SCUBA) and emergency escape breathing apparatus.

Typically, a tank 16 used in a breathing apparatus will include a fitting such as a threaded fitting. The threaded fitting may be an internally or externally threaded fitting. The threaded fitting may be used for connecting the tank 16 to the pneumatic system 20. In this way, the threaded fitting may be used to discharge breathing gas from the tank 16 into the pneumatic system for onward delivery to the user. The threaded fitting can also be used to connect the tank 16 to a refilling station to refill the tank 16 with pressurised breathing gas, after the tank 16 has been depleted though use by a user.

Generally, a tank 16 may include a flow valve (not shown) connected directly to the threaded fitting. The flow valve is generally securely fastened to the tank 16 using appropriate torquing equipment to prevent the flow valve from loosening from the tank 16. The flow valve is generally removed for servicing and/or replacement of either the flow valve or the tank 16. Therefore, the flow valve can generally be considered to form part of the tank 16. The flow valve may comprise a handwheel used to adjust the flow rate out of the tank 16, through the flow valve, and out of an outlet port of the flow valve. The flow valve can therefore be used to adjust the flow rate of breathing gas out of the tank 16 and into the pneumatic system 20.

During an emergency response, a breathing apparatus user (e.g., a firefighter) can only safely work while their tank 16 has an adequate supply of breathing gas. After a certain period of time of use (e.g., around 15, 30, or 45 minutes) the supply of breathing gas in the tank 16 is depleted and the tank 16 must be replaced. It will therefore be appreciated that during an emergency response, the tank 16 of user's breathing apparatus may be replaced several times. The general procedure for replacing a tank 16 may include: disconnecting the tank 16 from the pneumatic system 20; loosening the straps 14 and releasing the tank 16 from the back plate 12; securing a replenished tank 16 to the back plate 12 using the straps 14; and connecting the tank 16 to the pneumatic system 20. The tank 16 is generally disconnected from the remaining breathing apparatus at a connection point between the outlet port of the flow valve and the pneumatic system 20 (specifically, the first stage pressure reducer). It will therefore be understood that the connection between the flow valve and the pneumatic system 20 is disconnected and reconnected every time the tank 16 is replaced and may thus be operated several times during every emergency response.

Existing connectors used to connect breathing gas tanks to pneumatic systems can often loosen over time, especially when breathing apparatus systems are transported or stored for long periods. Temperature fluctuations, vibrations, and/or side loading during transport/storage or use can exacerbate loosening of the connection. Of course, if a SCBA user entered a dangerous environment, with a loose connection, their safety would be in danger.

As described previously, the invention described herein may generally relate to a connector for connecting a breathing gas tank to a pneumatic system of a breathing apparatus. The connector may be configured to permit tightening of the connector to the breathing gas cylinder, while preventing loosening of the connector. The connector may be further configured to be releasable to permit tightening and loosening of the connector.

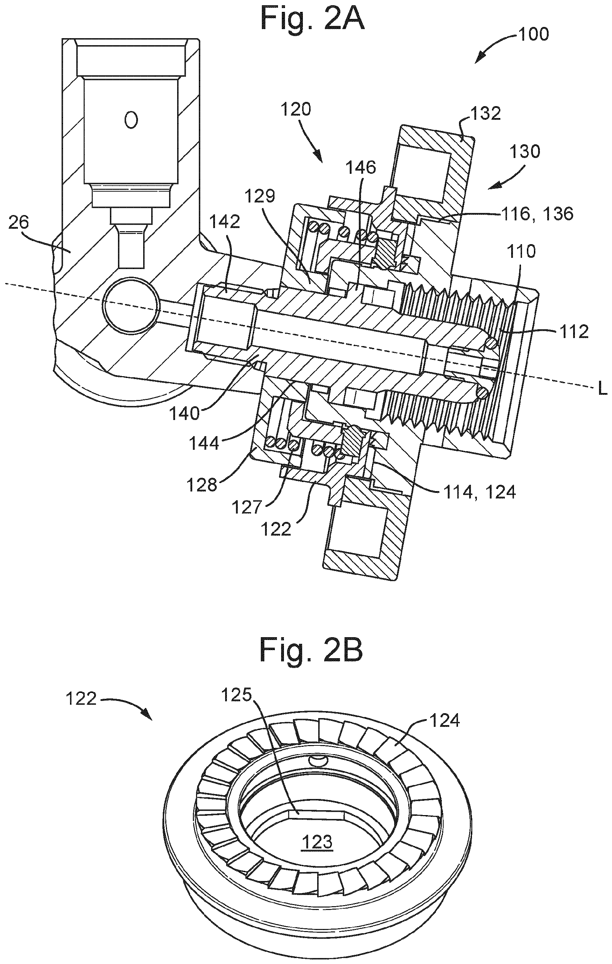

Turning to **Figure 2A****,** a threaded connector 100 according to an embodiment of the present invention is shown. The threaded connector 100 is configured to connect the tank 16 (e.g., via the flow valve) of the breathing apparatus 10 to the pneumatic system 20 of the breathing apparatus 10. As shown, a first stage pressure reducer 26 (comprised in the pneumatic system 20) is connected to the threaded connector 100 on one side. The threaded connector 100 includes a rotatable threaded element 110 configured to connect to a corresponding thread of the tank 16 (e.g., the outlet port of the flow valve, which is not shown but has a corresponding thread to the threaded element 110 to connect thereto). The threaded connector 100 of the embodiment shown also includes a central conduit 140. The central conduit 140 comprises a hollow core through which breathing gas is permitted to flow between the tank 16 and the first stage pressure reducer 26. The central conduit 140 comprises a threaded fitting 142 which is configured to connect to the first stage pressure reducer 26. In this way, the threaded connector 100 can act as an interface between the first stage pressure reducer 26 and the tank 16. The threaded fitting 142 is generally secured tightly to the first stage pressure reducer 26 and is not disconnected during normal use. The torquing required to secure the threaded fitting 142 to the first stage pressure reducer 26 will generally be such as to prevent the loosening of the threaded fitting 142 during normal use of the threaded connector 100.

It will be appreciated that when connecting and/or disconnecting the pneumatic system 20 to/from the tank 16 following the procedure outlined above, the tank 16 is fixed in place on the back plate 12. The threaded element 110 must therefore be rotated in order to connect it to the tank 16 (e.g., onto the outlet port of the flow valve).

The threaded element 110 is rotatable around its longitudinal axis (marked L in Figure 2A). The longitudinal axis L runs through the centre of the central conduit 140. Thus, the threaded element 110 is rotatable around the central conduit 140. Rotating the threaded element 110 in a first direction corresponds to tightening the threaded element 110 onto the tank 16. Rotating the threaded element 110 in a second direction, opposite the first direction, corresponds to untightening the threaded element 110 from the tank 16. In this embodiment, the threaded element 110 includes an internal thread 112 that tightens onto an external thread of the tank 16 to provide fluid communication of breathing gas from the tank 16 to the conduit 140. However, it will be appreciated that in other embodiments, the threaded element 110 may include an external thread that tightens onto an internal thread of the tank 16.

The central conduit 140 includes a shoulder 146 that constrains longitudinal motion of the threaded element 110 along the longitudinal axis L, such that the threaded element 110 cannot be removed from the threaded connector 100 during use.

In order to prevent unintentional and/or involuntary untightening of the threaded element 110 from the tank 16, a locking apparatus 120 is provided. The locking apparatus 120 is configured to control rotation of the threaded element 110. The locking apparatus 120 has a first configuration in which rotation of the threaded element 110 in the second direction (untightening) is prevented. In some embodiments, the first configuration may permit rotation in the first direction (tightening), while preventing rotation in the second direction (untightening). In other embodiments, the first configuration may prevent rotation in both the first and second directions (i.e. tightening and untightening). Figure 2A shows the threaded connector 100 in the first configuration.

The locking apparatus 120 also has a second configuration in which rotation of the threaded element 110 in both the first and second directions is permitted. The locking apparatus 120 may be adapted (e.g., transition) between the first and second configurations to selectively control rotation of the threaded element 110.

Also provided is a release mechanism 130 configured to adapt the locking apparatus from the first configuration to the second configuration. The release mechanism 130 of the embodiment of Figure 2A can be activated manually by a user pushing on a handwheel 132 (as will be described in more detail below). In some embodiments, a release mechanism is provided that can be activated automatically or remotely, for instance by an electrical sensor and actuator.

The locking apparatus 120 comprises a locking ring 122 arranged around the central conduit 140 and the threaded element 110. **Figure 2B** shows the locking ring 122 of this embodiment in more detail. The locking ring 122 is annular in shape. In this embodiment, the locking ring 122 comprises a hole 123, through which the threaded element 110 and the central conduit 140 are receivable. The hole 123 is defined by a keying portion 125. The keying portion 125 is configured to engage (either directly or indirectly via an intermediate component) with a flat external surface 144 of the central conduit 140. Such engagement prevents the locking ring 122 from rotating around the central conduit 140. The locking ring 122 is therefore rotationally fixed in position relative to both the central conduit 140 and the threaded element 110. The locking ring 122 encircles a central axis which, in use, is aligned with the longitudinal axis L.

The locking ring 122 comprises a first engaging surface 124 which is annular in shape, again about the longitudinal axis L in use. The first engaging surface 124 is configured to engage with a corresponding second engaging surface 114 of the threaded element 110 in the first configuration of the locking apparatus 120. In the second configuration of the locking apparatus 120, the first engaging surface 124 and the second engaging surface 114 are configured to be disengaged. It will be appreciated that, due to the rotationally fixed position of the locking ring 122, when the first and second engaging surfaces 124, 114 are engaged in the first configuration, the threaded element 110 is prevented from rotating in (at least) the second direction (untightening). The first engaging surface 124 is axially-facing in use.

In the embodiment shown, the first engaging surface 124 is an annular shape and comprises a first plurality of tooth-shaped profiles which arranged radially around the first engaging surface 124 and which extend longitudinally from the first engaging surface 124. Each tooth-shaped profile comprises a sloped end face with a first edge that extends from the first engaging surface 124 further than a second edge on the opposite side of the end face.

The second engaging surface 114 is an annular shape and comprises a corresponding second plurality of tooth-shaped profiles which arranged radially around the second engaging surface 114 and which extend longitudinally from the second engaging surface 114. The second engaging surface 114 is also axially-facing in use, and faces the opposing direction along the longitudinal axis L in use so that the two engaging surfaces 114,124 can engage each other.

The first and second plurality of tooth-shaped profiles are complementary and therefore interlock in the first configuration. Due to the sloped end face of each tooth-shaped profile, when in the first configuration, the first and second engaging surfaces 124, 114 can rotate past each other in the first direction (tightening) but cannot rotate in the second direction (untightening). In this way, the first and second engaging surfaces 124, 114 act as a ratchet mechanism in the first configuration to only permit rotation corresponding to tightening of the threaded element 110. However as described above, in some embodiments, in the first configuration, rotation of the threaded element 110 (and therefore the second engaging surface 114) is prevented in both directions. In these embodiments, the tooth-shaped profiles may not have a sloped end face, but may rather have a flat end face, which prevent the first and second engaging surfaces 124, 114 from rotating past each other in either direction. Speaking generally, the locking mechanism 120 in Figures 2A-C may be considered a ratchet mechanism. It will be appreciated that other forms of ratchet mechanism may be utilised to provide similar functionality to that of locking mechanism 120.

The ratchet mechanism may be such as to limit the maximum relative movement between the first and second engaging surfaces 124, 114 to be no more than 3 mm. It will be appreciated that National Fire Protection Association (NFPA) regulations specify that in a vibration test of a breathing air cylinder fitting, no more than 3 mm of linear movement of the fitting may be observed. In an exemplary embodiment of the present invention where the first and/or second engaging surface 124, 114 comprises an outer diameter of 26.5 mm, at least 28 teeth may be used (per engaging surface) to achieve a maximum movement of no more than 3 mm. With 28 teeth, the tooth pitch (distance from one tooth to an adjacent tooth) is less than 3 mm. Therefore, embodiments of the present invention with first and/or second engaging surfaces 124, 114 with outer diameters of at least 26.5 mm, may meet the requirements of the NFPA by including at least 28 teeth per engaging surface. Of course, it will be appreciated that other embodiments with different dimensions are also applicable to this invention.

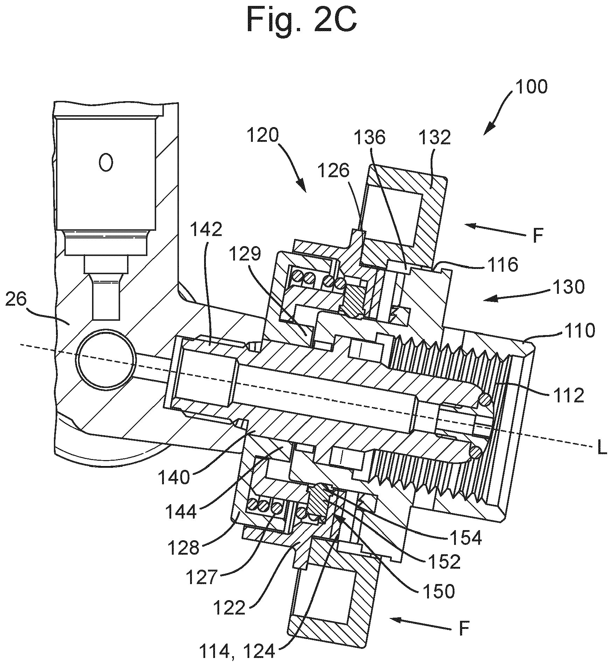

**Figure 2C** shows the threaded connector 100 with the locking apparatus 120 in the second configuration. As described previously, in the second configuration rotation of the threaded element 110 is permitted in both the first and second directions.

On activation of the release mechanism 130, the first engaging surface 124 is disengaged from the second engaging surface 114, therefore adapting the locking apparatus from the first configuration to the second configuration. It will therefore be understood that a function of the release mechanism 130 is to disengage the first and second engaging surfaces 124, 114. The release mechanism 130 can therefore be considered to be activated by moving the locking apparatus 120 and the threaded element 110 apart and/or by moving the locking apparatus 120 apart from the threaded element 110 (i.e., without moving the threaded element 110) to thereby move the first engaging surface 124 of the locking apparatus 120 apart from the second engaging surface 114 of the threaded element 110. Put simply, the release mechanism 130 is activated by axially moving one of the engaging surfaces 114,124, such that the engaging surfaces 114,124 separate (i.e. become disengaged), while maintaining the coaxial positioning of the engaging surfaces 114,124 about longitudinal axis L.

As mentioned earlier, the threaded connector 100 further includes an annular handwheel 132, forming part of the release mechanism 130. In this embodiment, the handwheel 132 is slidably engaged with the threaded element 110 such that rotational movement of the handwheel 132 around the longitudinal axis L is translated to the threaded element 110. However, longitudinal movement of the handwheel 132 along the longitudinal axis L is not translated to the threaded element 110. In this embodiment, the slidable engagement of the handwheel 132 is achieved by one or more longitudinally aligned keying surfaces 136 on an inner circumference of the handwheel 132 which cooperate with a corresponding one or more keying surfaces 116 on an outer surface of the threaded element 110. The keying surfaces 116, 136 permit the handwheel 132 to slide over the threaded element 110 longitudinally, but prevent rotation of the handwheel 132 independent from the threaded element 110.

In the case of the embodiment shown, the release mechanism 130 is activated by a user applying an axial force F to the handwheel 132. When a user applies a force F to the handwheel 132, the handwheel 132 moves along the longitudinal axis L until it abuts a shoulder 126 of the locking ring 122. As the force F continues to be applied, the handwheel continues to move and begins to move the locking ring 122 with it in the same direction. In doing so, the first engaging surface 124 of the locking ring 122 is disengaged (i.e., separated) from the second engaging surface 114 of the threaded element 110. Once the first and second engaging surfaces 124, 114 are disengaged, the locking apparatus 120 is said to be in the second configuration.

Once in the second configuration, and while continuing to apply the force F, the user is able to rotate the handwheel 132 to thereby impart a rotation on the threaded element 110 in either of the first and second directions, because the engaging surfaces 114,124 no longer engage one another and no longer interfere with the rotation of the handwheel 132 and, therefore, the threaded element 110. In doing so, the handwheel 132 can be used to tighten and/or untighten the connection between the threaded element 110 and the tank 16.

Once the user has modified (e.g., tightened, or untightened) the connection, the handwheel 132 and locking ring 122 can be returned to their original positions (shown in Figure 2A). Once in their original positions, the first and second engaging surfaces 124, 114 reengage with each other and the locking apparatus 120 returns to the first configuration in which rotation of the threaded element 110 is prevented.

Thus, a user is able to control both the release mechanism and the tightening/untightening of the threaded element simultaneously, using one hand. The user is therefore able to quickly tighten and/or untighten the threaded element, thereby saving time. It will be appreciated that where the user is a firefighter responding to an emergency incident (e.g., a fire), it is essential that they are able to respond as quickly as possible to the incident. By enabling the firefighter to control (e.g., begin) the flow of breathing gas from the breathing gas cylinder using just one hand, the firefighter is able to respond more quickly to an incident, thus increasing the likelihood that any affected people/property can be saved.

Further, during transportation or storage of breathing apparatus comprising the threaded connector 100, the risk of accidental untightening the threaded element 110 from the tank 16 is greatly reduced. A user must deliberately apply a longitudinal force F to the handwheel 132 and then simultaneously apply a torque (rotational force) to the handwheel 132 in order to rotate the threaded element 110. This two-step process minimises the possibility of accidentally untightening the threaded element 110 from the tank 16. Indeed, by requiring two separate forces to be applied simultaneously in different (perpendicular) directions, the likelihood of inadvertently applying such forces is very low. Therefore, it would be very unlikely that such an untightening could occur due to transportation or storage of the breathing apparatus for long periods, regardless of any temperature fluctuations, vibrations, and/or side loading during transport/storage or use.

Some embodiments of the present invention may include additional or alternative features which may further improve one or more characteristics of the invention. It will be appreciated that, unless mutually exclusive or explicitly excluded, any combination of features disclosed herein are applicable to the present invention.

In some embodiments (including the embodiment shown in Figures 2A-2C), the locking apparatus 120 may be biased into the first configuration, such that the locking apparatus 120 remains in the first configuration unless the release mechanism is activated. The locking apparatus 120 may further comprise a biasing element 127, such as a coiled spring. The biasing element 127 may bias (i.e., urge) the locking ring 122 axially towards the threaded element 110 to thereby maintain the engagement of the first engaging surface 124 with the second engaging surface 114, unless the biasing is overcome by the force F which is applied to the handwheel 132 in the opposing axial direction.

The biasing element 127 may be disposed between the locking ring 122 and a retainer 128. The retainer 128 may be positioned around the central conduit 140 and may optionally comprise a keying portion (similar to the keying portion 125 of the locking ring 122) to prevent the retainer 128 from rotating around the central conduit 140. The retainer 128 may guard the biasing element 127, inhibiting debris from interfering with the operation of the biasing element 127. In the embodiment shown, the retainer 128 is disposed between the flat external surface 144 of the central conduit 140 and the locking ring 122 and therefore acts to prevent rotation of the locking ring 122 around the central conduit 140. The retainer 128 includes a foot 129 which abuts the threaded element 110. Along with the shoulder 146 of the central conduit 140, the foot 129 prevents translational movement of the threaded element 110 along the longitudinal axis L.

In some embodiments, the threaded connector 100 includes a holding mechanism 150 configured to maintain the locking apparatus 120 in the second configuration without the release mechanism being activated (i.e., without the user continuing to apply force F). The holding mechanism 150 may comprise a plunger 152. The plunger 152 may extend from the locking ring 122 towards the longitudinal axis L in a radial direction. When the locking ring 122 is placed in a position corresponding to the second configuration, the plunger 152 may align with a recess 154 in the threaded element 110. Once aligned, the plunger 152 may extend further such that a portion of the plunger 152 enters the recess 154. In this state, the plunger 152 may prevent any relative translational movement between the locking ring 122 and the threaded element 110. Therefore, the plunger 152 may prevent the locking ring 122 from returning to a position corresponding to the first configuration. In this way, the holding mechanism 150 can simplify the procedure for a user tightening or untightening the threaded connector 100, while still preventing accidental loosening.

In order to ensure that the plunger 152 enters the recess 154, the plunger 152 may be biased as such. For example, a biasing element (e.g., a coiled spring) may urge the plunger 152 towards the recess 154 such that once the plunger 152 and recess 154 are aligned, the plunger 152 is forced into the recess 154. In some embodiments, there may be more than one holding mechanism 150 arranged around the locking ring 122. In the embodiment of Figure 2A-2C, two holding mechanisms 150 are show on opposite sides of the locking ring 122.

In some embodiments, the first and second engaging surfaces may engage through friction, rather than through interlocking teeth. In this way, the first and second engaging surfaces may form a clutch-like arrangement which prevents relative rotation between the surfaces through friction when the first and second engaging surfaces are engaged. In such embodiments, the first and second engaging surfaces may be formed of one or more materials with a coefficient of friction of at least 0.3, and ideally at least 0.5 or 0.8.

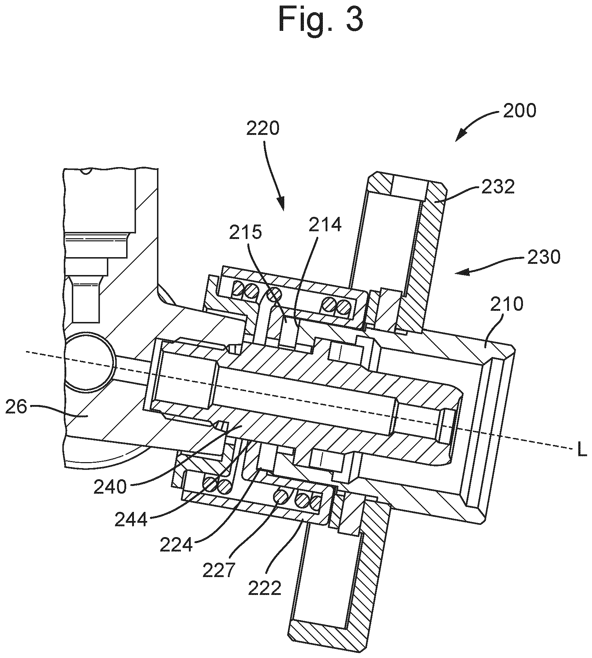

**Figure 3** shows an embodiment of a threaded connector 200 with such a frictional arrangement. Features in Figures 3 which correspond to Figure 2A-2C are labelled with the same reference numerals, incremented by 100. Like with threaded connector 100, the threaded connector 200 includes a locking ring 222 which engages a keying surface 244 of the central conduit 240 to prevent rotation of the locking ring 222. The first and second engaging surfaces 224, 214 in this embodiment are configured to engage a friction element 215 (e.g., a rubber gasket) disposed therebetween. In the first configuration of the locking apparatus 220, the biasing element 227 may urge the first engaging surface 224 towards the second engaging surface 214, thereby compressing the friction element 215. The pressure exerted on the friction element 215 produces a frictional force which prevents rotational movement of the threaded element 210 relative to the locking ring 222 (which is rotationally fixed in place, as described previously). The locking apparatus 220 therefore forms a clutch-like arrangement with the threaded element 210. In some embodiments, a one-way clutch assembly such as a sprag clutch may be used to permit tightening of the threaded element in both the first and second configurations, while preventing loosening in the first configuration.

The friction element 215 may be formed of any suitable material which can establish a sufficient level of friction between the first and second engaging surfaces 224, 214. In some embodiments, the friction element is formed as part of either the first or second engaging surface. In further embodiments, both the first and second engaging surfaces include a friction element.

When the release mechanism 230 is activated via the handwheel 232, the friction between the first and second engaging surfaces 224, 214 reduces until the threaded element 210 is able to rotate relative to the locking ring 222.

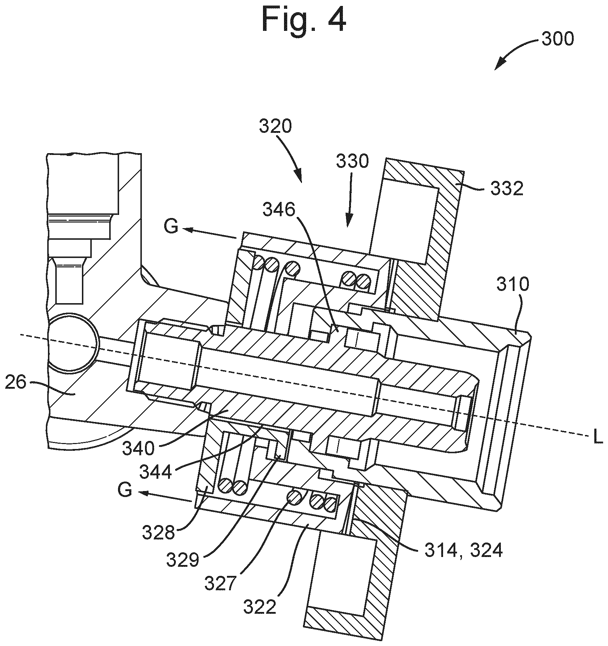

**Figure 4** shows another embodiment of the present invention. Features in Figures 4 which correspond to Figure 2A-2C are labelled with the same reference numerals, incremented by 200. The threaded connector 300 of this embodiment includes a second engaging surface 324 on the handwheel 332, rather than directly on the threaded element 310. Additionally, in this embodiment the threaded element 310 and the handwheel 332 are connected so as to act effectively as a single component. The retainer 328 includes an elongated foot 329 which abuts the threaded element 310. Along with the shoulder 346 of the central conduit 340, the elongated foot 329 prevents translational movement of the threaded element 310 along the longitudinal axis L.

As the handwheel 332 and threaded element 310 act as a single, fixed component in this embodiment, the handwheel 332 is not movable longitudinally to activate the release mechanism 330. Instead, the locking ring 322 is movable. When a user applies an axial force G to the locking ring 322, the locking ring 322 moves away from the handwheel 332, thereby disengaging the first and second engaging surfaces 324, 314 and placing the locking apparatus 320 in the second configuration. While still applying the force G, the user is able to rotate the handwheel 332 (and thus also the threaded element 310) to tighten or loosen the threaded connector. Like with the previously described embodiments, the locking ring 322 includes a keying surface which engages with a keying surface 344 of the central conduit 340 to prevent rotation of the locking ring 322.

Once the force G is no longer applied to the handwheel 332, the biasing element 327 pushes against retainer 328 and the locking ring 322 to move the locking ring 322 back towards the handwheel 332. The first and second engaging surfaces 324, 314 are then reengaged, returning the locking apparatus to the first configuration.

In embodiments where the locking ring 322 has a smaller diameter than the handwheel 332, the threaded connector 100 is further protected from accidental loosening as the locking ring 322 is protected by the handwheel 332 from accidental contact.

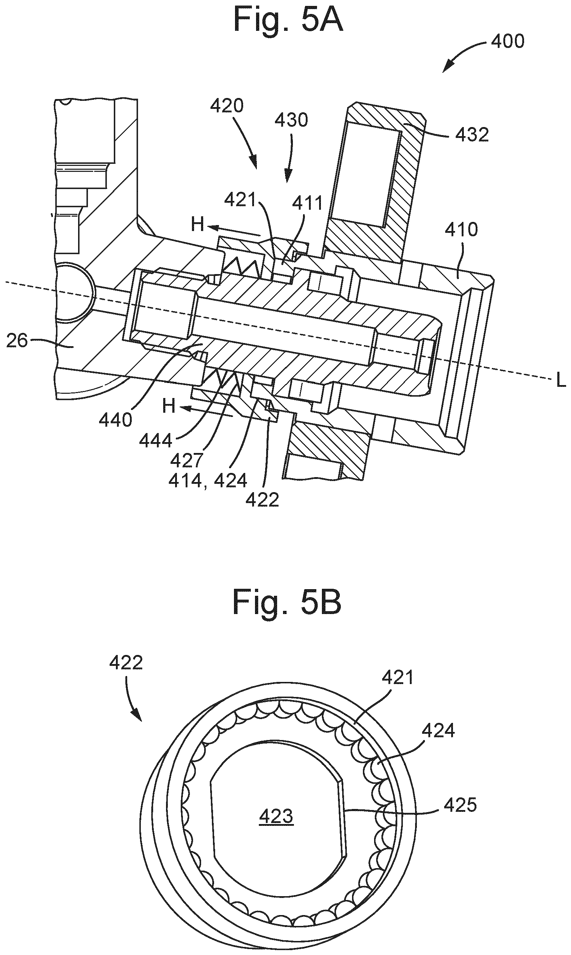

**Figure 5A** shows yet another embodiment of the present invention with an alternative locking apparatus 420. Features in Figures 5 which correspond to Figure 2A-2C are labelled with the same reference numerals, incremented by 300. In this embodiment, the threaded connector 400 operates similarly to the threaded connector 300 shown in Figure 4. The locking ring 422 is moved by the user on application of an axial force H into the second configuration and the biasing element 427 returns the locking ring 422 to its position corresponding to the first configuration. The release mechanism 430 works similarly to the release mechanism 330 of Figure 4 in that the handwheel 432 is fixed and the locking ring 422 is movable. However, the threaded connector 400 of Figure 5 has different first and second engaging surfaces 424, 414. In particular, the first and second engaging surfaces 424, 414 are aligned in parallel with the longitudinal axis L, rather than extending radially from the longitudinal axis L. In this way, the first and second engaging surfaces 424, 414 form circumferential rings around the locking ring 422 and the threaded element 410, respectively. In the embodiment shown, the first engaging surface 424 is formed internally around a recess 421 of the locking ring 422. The second engaging surface 414 is formed externally around a projection 411 of the threaded element 410. In this way, the first and second engaging surfaces 424, 414 can be considered substantially cylindrical or open cylindrical in shape.

The recess 421 of the locking ring 422 is configured to accept the projection 411 of the threaded element 410, such that the first engaging surface 424 slides over and around the second engaging surface 414.

Of course, it will be appreciated that in some embodiments, the first engaging surface may be formed externally around a projection of the locking ring and the second engaging surface may be formed internally around a recess of the threaded element. In this way, the first engaging surface may be received by the second engaging surface.

As shown in **Figure 5B****,** the first engaging surface 424 comprises a first plurality of tooth-like projections, each having a substantially semicircular profile. The first engaging surface 414 has a corresponding second plurality of tooth-like profiles which fit between the tooth-like projections of the first plurality of tooth-like profiles. The tooth-like profiles of this embodiment prevent rotation of the threaded element 410 in either direction when the locking apparatus 420 is in the first configuration. As with the locking ring 122 shown in Figure 2B, the locking ring 422 of Figure 5B includes a hole 423 which has keying portions 425 that align with the keying portions 444 of the central conduit 440 to prevent rotation of the locking ring 422 relative to the central conduit 440.

While teeth with sloped (e.g., Figure 2B) or semicircular (e.g., Figure 5B) profiles are depicted, may other profile shapes are also envisaged and are applicable to the present invention.

Notably, in all of the described embodiments, the torque required to rotate the threaded element (either tightening or untightening) is less than the torque required to untighten the threaded fixing of the central conduit. In this way, the central conduit (and thus the threaded connector) will not detach or loosen from the first stage pressure reducer regardless of whether the threaded element is being tightened or loosened.

It will be appreciated by those skilled in the art that although the invention has been described by way of example, with reference to one or more exemplary examples, it is not limited to the disclosed examples and that alternative examples could be constructed without departing from the scope of the invention as defined by the appended claims.

## Claims

1. A threaded connector (100, 200, 300, 400) configured to connect a pneumatic system of a breathing apparatus (10) to a threaded connection of a breathing gas cylinder (16), the threaded connector (100, 200, 300, 400) comprising:
a rotatable threaded element (110, 210, 310, 410) configured to connect to a corresponding thread of a breathing gas cylinder (16), the rotatable threaded element (110, 210, 310, 410) being rotatable in a first direction corresponding to tightening rotation of the threaded element (110, 210, 310, 410) to the corresponding thread and in a second direction corresponding to untightening rotation of the threaded element (110, 210, 310, 410) to the corresponding thread;
a locking apparatus (120, 220, 320, 420) configured to control rotation of the threaded element (110, 210, 310, 410), the locking apparatus (120, 220, 320, 420) having a first configuration preventing rotation of the threaded element (110, 210, 310, 410) in the second direction, and a second configuration permitting rotation of the threaded element (110, 210, 310, 410) in both the first and second directions; and
a release mechanism (130, 230, 330, 430) configured to adapt the locking apparatus (120, 220, 320, 420) from the first configuration to the second configuration.

2. The threaded connector (100, 200, 300, 400) of claim 1, wherein the locking apparatus (120, 220, 320, 420) comprises a first engaging surface (124, 224, 324, 424), the first engaging surface (124, 224, 324, 424) being configured to engage with a corresponding second engaging surface (114, 214, 314, 414) of the threaded element (110, 210, 310, 410) in the first configuration and disengage from the corresponding second engaging surface (114, 214, 314, 414) of the threaded element (110, 210, 310, 410) in the second configuration.

3. The threaded connector (100, 200, 300, 400) of claim 2, wherein the first engaging surface is an annular first engaging surface (124, 224, 324, 424) arranged coaxially, and optionally concentrically, with the threaded element (110, 210, 310 410) and the second engaging surface is an annular second engaging surface (114, 214, 314, 414) arranged coaxially with the annular first engaging surface (124, 224, 324, 424).

4. The threaded connector (100, 200, 300, 400) of claim 2 or 3, wherein on activation of the release mechanism (130, 230, 330, 430), the first engaging surface (124, 224, 324, 424) is disengaged from the second engaging surface (114, 214, 314, 414) so as to adapt the locking apparatus (120, 220, 320, 420) from the first configuration to the second configuration.

5. The threaded connector (100, 200, 300, 400) of any of claims 2-4, wherein the release mechanism (130, 230, 330, 430) is activated by moving the locking apparatus (120, 220, 320, 420) and the threaded element 110, 210, 310, 410) apart, optionally by moving the locking apparatus (120, 220, 320, 420) apart from the threaded element (110, 210, 310, 410), to thereby move the first engaging surface (124, 224, 324, 424) of the locking apparatus (120, 220, 320, 420) apart from the second engaging surface (114, 214, 314, 414) of the threaded element (110, 210, 310, 410), optionally wherein the threaded connector (100, 200, 300, 400) further comprises an annular handwheel (132, 232, 332, 432) arranged around the threaded element (110, 210, 310, 410), wherein rotation of the handwheel (132, 232, 332, 432) causes rotation of the threaded element (110, 210, 310, 410), and wherein the release mechanism (130, 230, 330, 430) is activated by pushing the handwheel (132, 232, 332, 432) towards the locking apparatus (120, 220, 320, 420) to move the second engaging surface (114, 214, 314, 414) of the locking apparatus (120, 220, 320, 420) apart from the first engaging surface (124, 224, 324, 424) of the threaded element (110, 210, 310, 410).

6. The threaded connector (100, 300, 400) of any of claims 2-5, wherein the first engaging surface (124, 324, 424) comprises a first plurality of tooth-shaped profiles configured to interlock with a corresponding second plurality of tooth-shaped profiles comprised in the corresponding second engaging surface (114, 314, 414) in the first configuration to thereby prevent rotation of the threaded element (110, 310, 410) relative to the locking apparatus (120, 320, 420), optionally wherein the first and second plurality of tooth-shaped profiles each have a tooth pitch of up to 3 mm.

7. The threaded connector (100, 300, 400) of claim 6, wherein the first plurality of tooth-shaped profiles of the first engaging surface (124, 324, 424) is configured to engage with the second plurality of tooth-shaped profiles of the second engaging surface (114, 314, 414) substantially simultaneously when the locking apparatus (120, 320, 420) is adapted from the first configuration to the second configuration.

8. The threaded connector (200) of any of claims 2-7, wherein the first engaging surface (224) is configured to frictionally engage the second engaging surface (214) to thereby prevent rotation of the threaded element (210) relative to the locking apparatus (220) in the first configuration.

9. The threaded connector (100, 200, 300, 400) of any of claims 2-8, wherein the second engaging surface (114, 214, 314, 414) is arranged around the threaded element (110, 210, 310, 410), optionally extending radially or longitudinally relative to the threaded element (110, 210, 310, 410).

10. The threaded connector (100, 200, 300, 400) of any of the preceding claims, wherein in the first configuration the locking apparatus (120, 220, 320, 420) permits rotation of the threaded element (110, 210, 310, 410) in the first direction while preventing rotation of the threaded element (110, 210, 310, 410) in the second direction to permit tightening rotation and prevent untightening rotation of the threaded element (110, 210, 310, 410), so as to prevent disconnection of the threaded connector (100, 200, 300, 400) with the breathing gas cylinder (16).

11. The threaded connector (100) of any of the preceding claims, wherein the locking apparatus (120) comprises a holding mechanism (150) configured to maintain the locking apparatus (120) in the second configuration without the release mechanism (130) being activated, optionally wherein the holding mechanism (150) comprises a radially extending plunger (152) configured to engage a recess (154) in the threaded element (110) when the locking apparatus (120) is in the second configuration to thereby hold the locking apparatus (120) in the second configuration.

12. The threaded connector (100, 200, 300, 400) of any of the preceding claims, wherein the locking apparatus (120, 220, 320, 420) is biased into the first configuration, such that the locking apparatus (120, 220, 320, 420) remains in the first configuration unless the release mechanism (130, 230, 330, 430) is activated, optionally wherein the locking apparatus (120, 220, 320, 420) is biased by a biasing element (127, 227, 327, 427) configured to urge the first engaging surface (124, 224, 324, 424) of the locking apparatus (120, 220, 320, 420) towards the second engaging surface (114, 214, 314, 414) of the threaded element (110, 210, 310, 410).

13. The threaded connector (100, 200, 300, 400) of any of the preceding claims, further comprising a central conduit (140, 240, 340, 440) configured to permit a flow of breathing gas from a breathing gas cylinder (16) to a pneumatic system (20), wherein the locking apparatus (120, 220, 320, 420) and the threaded element (110, 210, 310, 410) are arranged around a longitudinal axis (L) of the central conduit (140, 240, 340, 440), and optionally wherein the threaded element (110, 210, 310, 410) is rotatable around the central conduit (140, 240, 340, 440), optionally wherein the central conduit (140, 240, 340, 440) comprises a keying surface (144, 244, 344, 444) configured to engage a complementary keying surface of the locking apparatus (120, 220, 320, 420) to prevent rotation of the locking apparatus (120, 330, 320, 420) around the central conduit (140, 240, 340, 440).

14. The threaded connector (100, 200, 300, 400) of any of the preceding claims wherein:
the release mechanism (130, 230, 330, 430) is arranged coaxially with threaded element (110, 210, 310, 410); and/or
the release mechanism (130, 230, 330, 430) is longitudinally movable along an axis of rotation of the threaded element (110, 210, 310, 410) to adapt the locking apparatus (120, 220, 320, 420) from the first configuration to the second configuration.

15. A breathing apparatus (10) comprising:
a breathing gas cylinder (16);
a pneumatic system (20), optionally comprising a first stage pressure reducer (26);
and a threaded connector (100, 200, 300, 400) according to claim 13 or 14,
wherein the threaded element (110, 210, 310, 410) of the threaded connector (100, 200, 300, 400) is connected to the breathing gas cylinder (16) and the central conduit (140, 240, 340, 440) of the threaded connector (100, 200, 300, 400) is connected to the pneumatic system (20), thereby connecting the breathing gas cylinder (16) and the pneumatic system (20).
